# EUROPÄISCHE PATENTSCHRIFT

(11) **EP 2 911 808 B1**
(45) Veröffentlichungstag und Bekanntmachung des Hinweises auf die Patenterteilung: **21.02.2018**
(21) Anmeldenummer: 13783254.9
(22) Anmeldetag: 22.10.2013
(51) Int. Cl.: B05D 3/06, F26B 3/28, B01J 19/12, G02B 5/20, G02B 5/28

(54) **UV-BESTRAHLUNGSVORRICHTUNG FÜR DEN GETAKTETEN BETRIEB**
UV IRRADIATION DEVICE FOR CLOCKED OPERATION
DISPOSITIF D'INSOLATION AUX ULTRAVIOLETS POUR SERVICE CYCLIQUE

(30) Priorität: 23.10.2012 DE 102012020743
(43) Veröffentlichungstag der Anmeldung: 02.09.2015
(73) Patentinhaber: Oerlikon Surface Solutions AG, Trübbach, 9477 Trübbach (CH)
(72) Erfinder: RIBEIRO, Carlos, Ho Chi Minh City Vietnam (VN); KARSCH, Tasso, 71336 Waiblingen (DE); SCHÄFER, Rüdiger, 79865 Grafenhausen (DE); KASPAR, Martin, 8887 Mels (DE)
(74) Vertreter: Troesch Scheidegger Werner AG
(86) Internationale Anmeldenummer: PCT/EP2013/003176
(87) Internationale Veröffentlichungsnummer: WO 2014/063809

(56) Entgegenhaltungen:
- WO-A1-98/54525
- DE-A- 3 529 800
- FR-A1- 2 341 815

## Beschreibung

Die vorliegende Erfindung bezieht sich auf ein Verfahren zur UV-Vernetzung von Lackschichten gemäss dem Oberbegriff des Anspruch 1. Die Erfindung bezieht sich ausserdem auf eine Bestrahlungsvorrichtung zur Durchführung des Verfahrens.

Durch UV-Vernetzung werden auf Substrate aufgebrachte Lacke gehärtet und getrocknet. Der Lack bleibt bis zur Vernetzung fliessfähig und kann nach dem Aufbringen auf ein Substrat schlagartig verfestigt werden.

Als UV-Strahlungsquelle wird in den meisten Fällen eine Strahlungsquelle verwendet welche sowohl UV Strahlung als auch sichtbares Licht und einen hohen Prozentsatz an Infrarotstrahlung (IR-Strahlung) aussendet. Der hohe Anteil an IR-Strahlung führt zu hohen Prozesstemperaturen welche die zu bestrahlenden Substrate schädigen können. Vor allem wenn es sich bei den belackten Substraten um Kunststoffsubstrate handelt werden mit der herkömmlichen Bestrahlung häufig kritische Temperaturen erreicht. Beispielsweise sollte bei dem unter dem Namen ABS bekannten Kunststoffmaterial Temperaturen von 85°C nicht überschritten werden.

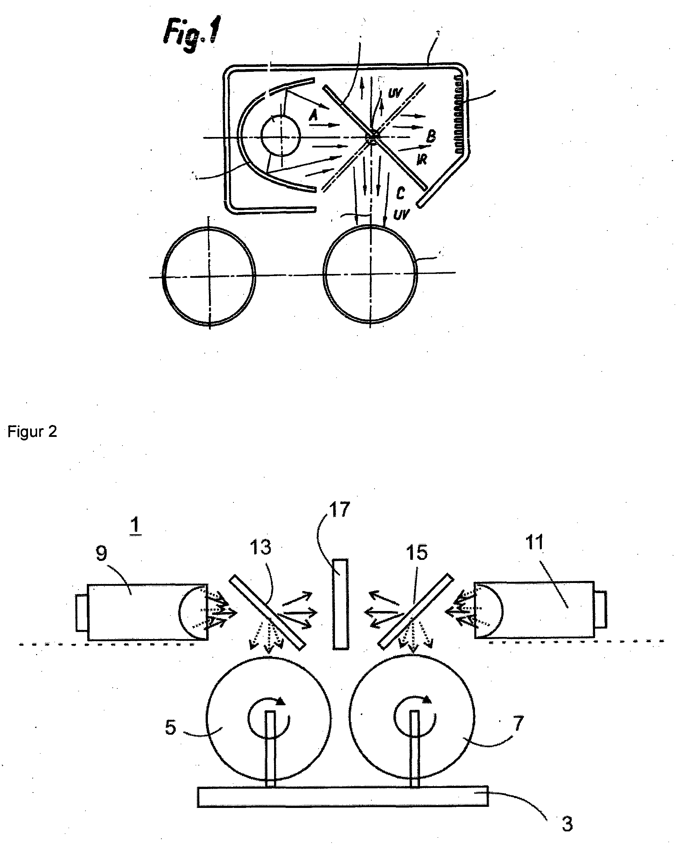

Gemäss der DE 3529800 wird dieses Problem dadurch gelöst, dass die Strahlen der UV-Strahlungsquelle derart über einen die Strahlen selektionierenden Spiegel auf das Substrat gerichtet werden, dass das Substrat ausschliesslich von umgelenkten UV-Strahlen beaufschlagt wird, wobei der wärmereichere Anteil der Strahlen den Spiegel geradlinig durchdringt. Figur 1 zeigt den entsprechenden Stand der Technik. Hinter dem Spiegel im Strahlengang durch den Spiegel hindurchgedrungene wärmereiche Anteil der Strahlen wird auf eine Kühlvorrichtung angeordnet. Dafür eignen sich zum Beispiel Kühlrippen, welche Bestandteil der Gehäusewand sind.

Die DE 3529800 behandelt auch das Problem, dass bei einer Betriebsunterbrechung die Strahlungsquelle möglichst nicht ausgeschaltet werden sollte. Hier wird der Spiegel wenn er in einem Winkel von 45° zur optischen Achse des Strahlenbündels angeordnet ist als um 90° verschwenkbar ausgestaltet, so dass die UV-Strahlung bei einer Betriebsunterbrechung schnell und einfach weggelenkt werden kann. Das UV-reiche Strahlenbündel wird dabei um 180° umgelenkt, so dass es auf die Gehäusewand der Bestrahlungsvorrichtung trifft.

Eine relevante Vorrichtung zum Bestrahlen von Substraten ist auch aus der WO 98/54525 A1 bekannt. Dies hat allerdings zum Nachteil, dass der Spiegel in spezieller Art und Weise ausgestaltet sein muss. Der Spiegel kann entweder einseitig oder beidseitig mit einer UV-reflektierenden Schicht versehen sein. Liegt auf beiden Substratseiten eine UV-reflektierende Schicht vor so ist zu bedenken, dass mit dieser Schicht auch immer ein Teil des sichtbaren Lichtes und/oder der IR-Strahlung reflektiert wird. Dies ist insbesondere dann der Fall, wenn die Strahlung unter unterschiedlichen Einfallswinkeln auf die Spiegeloberfläche trifft. Mit einer doppelseitigen UV-Reflexionsschicht erhöht sich also der Anteil der Nicht-UV-Strahlen der unerwünscht in den Strahlengang des UV-Lichtes reflektiert wird und auf dem Substrat auftrifft.

Ist lediglich auf einer Seite des Spiegelsubstrates eine UV-reflektierende Schicht realisiert, so kann auf der anderen Seite eine Antireflexionsschicht für sichtbares Licht und für IR-Strahlung über einen weiten Einfallsvvinkelbereich realisiert werden. In diesem Fall sollte aber als Spiegelsubstratmaterial ein spezielles, die UV-Strahlung im Wesentlichen nicht absorbierendes Material gewählt werden. Ansonsten würde beim zweimaligen Durchlaufen des Substrates zu viel UV-Strahlung absorbiert und der Spiegel könnte Schaden nehmen. Wohl auch aus diesem Grund wird in der DE 3529800 die Strahlungsquelle vorzugsweise auf Halblast geschaltet. Solche die UV-Strahlung nicht absorbierenden Materialien, wie zum Beispiel Quarzglas, sind jedoch teuer. Dies spielt insbesondere bei grossen Vorrichtungen eine Rolle.

Der Erfindung liegt die Aufgabe zugrunde eine Vorrichtung anzugeben, mit der die oben geschilderten Probleme des Stand der Technik zumindest gemildert und vorzugsweise ganz beseitigt werden.

Die Aufgabe wird erfindungsgemäss dadurch gelöst, dass ausgehend von einer Bestrahlungsvorrichtung wie in Figur 1 gezeigt, der Kühlvorrichtung 6 zusätzlich als eine die UV-Strahlung absorbierende Vorrichtung ausgestaltet wird. Erfindungsgemäss wird, soll die UV-Bestrahlung der Substrate unterbrochen werden, der Spiegel aus dem Strahlengang der Strahlung herausbewegt. Dies kann beispielsweise durch Rotation des Spiegels um eine Achse, welche ausserhalb des Strahlengangs der Strahlung liegt erreicht werden.

Möglich wäre es auch den Spiegel so zu drehen, dass lediglich die Kanten des Spiegelsubstrates mit Strahlung beaufschlagt werden oder Strahlung mit sehr grossen Einfallswinkeln auf die Substratoberfläche auftrifft und zum Grossteil reflektiert wird aber aufgrund der grossen Einfallswinkel kaum aufgrund dieser Reflexion abgelenkt wird.

Das Spiegelsubstrat kann nun aus einem die UV-Strahlung absorbierenden Material gemacht sein und es sich auch möglich lediglich auf einer Seite des Spiegelsubstrates eine UV-reflektierende Beschichtung aufzubringen und vorzugsweise die andere Spiegelsubstratseite eine Antireflexionsschicht vorzusehen.

Gemäss einer bevorzugten Ausführungsform der vorliegenden Erfindung werden die Kanten des Spiegelsubstrates mit der einfallenden Strahlung zumindest teilweise blockierende (absorbierend oder reflektierend) Mitteln versehen.

Gemäss einer weiteren bevorzugten Ausführungsform werden der Bestrahlungsvorrichtung zu bestrahlende Substrate mittels einer Transportvorrichtung getacktet zugestellt. Dabei ist es von besonderem Vorteil, wenn während des Zustellvorgangs die UV-.Beaufschlagung des Bereichs in den die Substrate zur Bestrahlung positioniert werden unterbrochen wird. Dies kann, ebenfalls getacktet und vorzugsweise mit der Zustellung synchronisiert durch Verschwenken des Spiegels bewerkstelligt werden.

Gemäss einer weiteren Ausführungsform der vorliegenden Erfindung wird der Spiegel während der UV-Beaufschlagung in Oszillationsbewegung versetzt, wodurch eine homogenere Bestrahlung der Substrate erzielt wird.

Die Erfindung wird nun anhand eines Beispiels näher erläutert.
Figur 1 zeigt eine Bestrahlungsvorrichtung gemäss dem Stand der Technik
Figur 2 zeigt eine erfindungsgemässe Bestrahlungsvorrichtung im Beaufschlagungsmodus
Figur 3 zeigt eine erfindungsgemässe Bestrahlungsvorrichtung im Zustellmodus.

Gezeigt in Figur 2 ist eine erfindungsgemässe Bestrahlungsvorrichtung 1 mit Transportvorrichtung 3 deren Träger als Doppelspindelträger ausgestaltet ist. Auf Spindeln 5, 7 sind die auszuhärtenden Substrate angeordnet, die jedoch aus Gründen der Übersichtlichkeit hier nicht gezeigt sind. Die Bestrahlungsvorrichtung 1 umfasst in diesem Beispiel zwei Strahlungsquellen 9. 11 welche sowohl UV-Strahlung (Pfeile mit gestrichelter Linie) als auch sichtbares Licht und IR-Strahlung aussendet. Im Folgenden wird sichtbares Licht und IR-Strahlung gemeinsam als wärmereiche Strahlung (W-Strahlung) bezeichnet (dargestellt als Pfeile mit durchgezogener Linie). Die Strahlungsquellen 9,11 sind im Beispiel so orientiert, dass deren unabgelenkte Stahlen sich in einer Ebene kreuzen. In dieser Kreuzungsebene wir ein die UV-Strahlung und die W-Strahlung absorbierende Absorberplatte 17 vorgesehen. Vorzugsweise haben die beiden Strahlungsquellen 9,11 eine solche Orientierung, dass sie sich gegenseitig direkt bestrahlen würden, wäre die Absorberplatte nicht vorgesehen.

In die Strahlengänge von den Strahlungsquellen zu der Absorberplatte ist jeweils ein wellenlängenselektiver Spiegel 13, 15 vorgesehen. Die Spiegel sind um 45° gegen die optische Achse der Strahlungsquellen geneigt, so dass sie Strahlung um 90° aus dem ursprünglichen Strahlengang reflektieren. Die Spiegel 13, 15 reflektieren die UV-Strahlung und transmittieren zu einem grossen Teil und vorzugsweise grösstenteils die W-Strahlung. Solche Spiegel können beispielsweise mittels optischen Interferenzfiltern realisiert werden. Besonders vorteilhaft ist es auf einer Seite des Spiegelsubstrates, welches ein normales BK7 Glas sein kann den UV-Reflektor und W-Strahlung Transmitter zu realisieren und auf der anderen Seite eine Breitbandantireflexbeschichtung vorzusehen. Beides ist mittels dünnen Multilagenschichten, welche Interferenz zeigen, machbar.

In den Strahlengängen der um 90° abgelenkten UV-Strahlung sind die Spindeln 5,7 zugestellt. Bei angeschalteten Strahlungsquellen 9,11 wird somit die W-Strahlung nicht abgelenkt und transmittiert durch die Spiegel 13, 15 hindurch zur Absorberplatte. Demgegenüber wird die UV-Strahlung durch Reflexion an den Spiegeln auf die auf den Spindeln angeordneten Substrate gelenkt. Die Spindeln sind üblicherweise als rotierbare Spindeln ausgestaltet so dass sie während der UV-Bestrahlung die verschiedenen Substrate in die jeweiligen Beaufschlagungszonen rotieren können. Im Beispiel werden die Spiegel 13, 15 mit kleiner Amplitude (z.B. 1°) oszilliert um eine von der Senkrechten auf die Spiegeloberfläche sich unterscheidenden Achse, welche in der durch die optischen Achsen der reflektierte Strahlung und der unabgelenkten Strahlung gebildeten Ebene liegt. Hierdurch erhöht sich die Homogenität der UV-Bestrahlung.

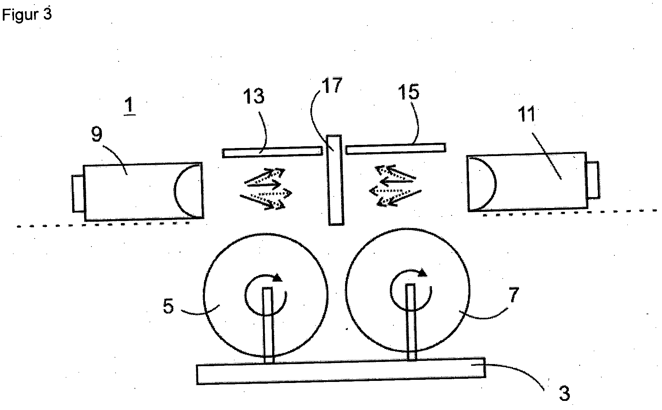

Um die UV-Bestrahlung zu beenden werden die Spiegel 13, 15 in eine Orientierung geschwenkt, in der die optische Achse der unäbgelenkten Strahlung parallel zu Spiegeloberfläche ist. Dies geschieht vorzugsweise um eine Achse, welche ausserhalb des Strahlengangs der ungestörten Strahlungsquelle liegt. Auf diese Weise propagiert der überwiegende Teil der UV-Strahlung ebenfalls unabgelenkt zur Absorberplatte und wird dort absorbiert. Die dementsprechende Situation ist in Figur 3 dargestellt. In dieser Situation können mittels der Transportvorrichtung die bereits UV-bestrahlten Spindeln abtransportiert und neue zu bestrahlende Spindeln in den Bestrahlungsbereich zugestellt werden. Mit dem Zurückschwenken der Spiegel in die ursprüngliche Orientierung beginnt dann eine neue Bestrahlungssequenz.

Es wurde gemäss einer bevorzugten Ausführungsform der vorliegenden Erringung eine Bestrahlungsvorrichtung offenbart mit
- zumindest einer Strahlungsquelle welche sowohl UV-Strahlung als auch W-Strahlung, das heisst sichtbares Licht und/oder IR-Strahlung aussendet und
- mit einer Transportvorrichtung zur Zustellung von zu bestrahlenden Substraten und
- zumindest einem unter einem Winkel von 45° die UV-Strahlung reflektierende und W-Strahlung transmittierende wellenlängenselektives Filter
- mit Mittel zur Absorption von IR-Strahlung welche in Propagationsrichtung dem optischen Filter nachgeordnet in dem Strahlengang der vom wellenlängenselektiven Filter nicht abgelenkten W-Strahlung angeordnet ist
dadurch gekennzeichnet, dass die Mittel zur Absorption von IR-Strahlung auch als Mittel zur Absorption von sichtbarem Licht und von UV-Strahlen ausgebildet sind und dass die Bestrahlungsvorrichtung Bewegungsmittel umfasst, um das wellenlängenselektive Filter in den Strahlengang der Strahlungsquelle hinein zu führen und aus diesem herauszuführen

Die Bewegungsmittel können so ausgestaltet sein, dass sie eine Rotation des Filters um eine Achse erlauben, welche ausserhalb des Strahlengangs liegt.

Das wellenlängenselektive Filter kann als Interferenzfilter ausgebildet sein. Es kann beispielsweise lediglich auf einer Seite des Filtersubstrates ein UV-reflektierendes Schichtsystem vorgesehen ist und es kann auf der anderen Seite des Filtersubstrates bezüglich der W-Strahlung ein Antireflexschicht vorgesehen sein.

Es wurde ein Verfahren zur Beaufschlagung von Substraten mit UV-Strahlung offenbart umfassend die Schritte:
- Bereitstellung einer Strahlungsquelle welche UV-Strahlung und W-Strahlung aussendet
- Separation der UV-Strahlung von der W-Strahlung mittels Transmission der W-Strahlung durch ein wellenlängenselektives Filter und Reflexion der UV-Strahlung an dem wellenlängenselektiven Filter
- Bereitstellung von Absorptionsmitteln welche vom wellenlängenselektiven Filter nicht abgelenkte Strahlung absorbieren
- Zustellung der Substrate in den für die UV-Beaufschlagung vorgesehenen Bereich
- Abtransport der mit UV-Strahlung beaufschlagten Substrate,
wobei vor der Zustellung und/oder des Abtransportes der Substrate das wellenlängenselektive Filter in seiner Orientierung und/oder Position verändert wird dergestalt, dass während der Zustellung und/oder des Abtransportes der Substrate die UV-Strahlung nicht vom wellenlängenselektiven Filter reflektiert wird und daher auf die Absorptionsmittel auftrifft und von diesen absorbiert wird.

Bei dem Verfahren wird das Filter während der Zustellung und/oder des Abtransports der Substrate im Wesentlichen aus dem Strahlengang herausbewegt wird.

Das Filter kann durch eine Rotation um eine Achse ausserhalb des Strahlengangs aus dem Strahlengang bewegt wird. Das Verfahren kann mehrmals und getaktet durchgeführt wird.

## Patentansprüche

1. Bestrahlungsvorrichtung mit
- zumindest einer Strahlungsquelle welche sowohl UV-Strahlung als auch W-Strahlung, das heisst sichtbares Licht und/oder IR-Strahlung aussendet und
- mit einer Transportvorrichtung zur Zustellung von zu bestrahlenden Substraten und
- zumindest einem unter einem Winkel von 45° die UV-Strahlung reflektierende und W-Strahlung transmittierende wellenlängenselektives Filter
- mit Mittel zur Absorption von IR-Strahlung welche in Propagationsrichtung dem optischen Filter nachgeordnet in dem Strahlengang der vom wellenlängenselektiven Filter nicht abgelenkten W-Strahlung angeordnet ist
**dadurch gekennzeichnet, dass** die Mittel zur Absorption von IR-Strahlung auch als Mittel zur Absorption von sichtbarem Licht und von UV-Strahlen ausgebildet sind und dass die Bestrahlungsvorrichtung Bewegungsmittel umfasst, um das wellenlängenselektive Filter in den Strahlengang der Strahlungsquelle hinein zu führen und aus diesem herauszuführen

2. Bestahlungsvorrichtung nach Anspruch 1, **dadurch gekennzeichnet, dass** die Bewegungsmittel eine Rotation des Filters um eine Achse erlauben, welche ausserhalb des Strahlengangs liegt.

3. Berstrahlungsvorrichtung nach einem der vorangehenden Ansprüche, **dadurch gekennzeichnet, dass** das wellenlängenselektive Filter als Interferenzfilter ausgebildet ist.

4. Bestrahlungsvorrichtung nach einem der vorangehenden Ansprüche, **dadurch gekennzeichnet, dass** lediglich auf einer Seite des Filtersubstrates ein UV-reflektierendes Schichtsystem vorgesehen ist.

5. Bestrahlungsvorrichtung nach Anspruch 4 **dadurch gekennzeichnet, dass** auf der anderen Seite des Filtersubstrates bezüglich der W-Strahlung ein Antireflexschicht vorgesehen ist.

6. Verfahren zur Beaufschlagung von Substraten mit UV-Strahlung umfassend die Schritte:
- Bereitstellung einer Strahlungsquelle welche UV-Strahlung und W-Strahlung aussendet
- Separation der UV-Strahlung von der W-Strahlung mittels Transmission der W-Strahlung durch ein wellenlängenselektives Filter und Reflexion der UV-Strahlung an dem wellenlängenselektiven Filter
- Bereitstellung von Absorptionsmitteln welche vom wellenlängenselektiven Filter nicht abgelenkte Strahlung absorbieren
- Zustellung der Substrate in den für die UV-Beaufschlagung vorgesehenen Bereich
- Abtransport der mit UV-Strahlung beaufschlagten Substrate
**dadurch gekennzeichnet, dass** vor der Zustellung und/oder des Abtransportes der Substrate das wellenlängenselektive Filter in seiner Orientierung und/oder Position verändert wird dergestalt, dass während der Zustellung und/oder des Abtransportes der Substrate die UV-Strahlung nicht vom wellenlängenselektiven Filter reflektiert wird und daher auf die Absorptionsmittel auftrifft und von diesen absorbiert wird.

7. Verfahren nach Anspruch 6, **dadurch gekennzeichnet, dass** das Filter während der Zustellung und/oder des Abtransports der Substrate im Wesentlichen aus dem Strahlengang herausbewegt wird.

8. Verfahren nach Anspruch 7, **dadurch gekennzeichnet, dass** das Filter durch eine Rotation um eine Achse ausserhalb des Strahlengangs aus dem Strahlengang bewegt wird.

9. Verfahren nach einem der Ansprüche 6 bis 8, **dadurch gekennzeichnet dass** das Verfahren mehrmals und getaktet durchgeführt wird.

## Claims

1. An irradiation apparatus, comprising
- at least one radiation source, which emits UV-radiation as well as W-radiation, i.e. visible light and/or IR-radiation, and
- a transport arrangement for feeding substrates to be irradiated, and
- at least one wave-length selective filter, which reflects the UV-radiation about an angle of 45° and transmits W-radiation,
- means for absorbing of IR-radiation, located downstream of the optical filter, as considered in direction of propagation, in the ray-path of the W-radiation, not deflected by the wave-length selective filter,
**characterized in that** the means for absorbing of IR-radiation are also formed as means for absorbing visible light and UV-radiation, and that the irradiation apparatus comprises moving means for moving the wave-length selective filter into and out of the ray-path of the radiation source.

2. The irradiation apparatus according to claim 1, **characterized in that** the moving means allow for a rotation of the filter about an axis, which is located outside the ray-path.

3. The irradiation apparatus according to one of the preceding claims, **characterized in that** the wave-length selective filter is formed as an interference filter.

4. The irradiation apparatus according to one of the preceding claims, **characterized in that** only on one side of the filter substrate a UV reflecting layer system is provided.

5. The irradiation apparatus according to claim 4, **characterized in that** there is applied on the other side of the filter substrate an anti-reflex layer for the W-radiation.

6. A method for irradiating substrates by UV-radiation, comprising the steps of:
- providing a radiation source, which emits UV-radiation and W-radiation,
- separation of the UV-radiation from the W-radiation by means of transmission of the W-radiation through a wave-length selective filter and reflection of UV-radiation at the wave-length selective filter,
- providing of absorption means, which absorb radiation not deflected by the wave-length selective filter,
- feeding the substrates into the area provided for the UV-irradiation,
- removal of the substrates having been irradiated by the UV-radiation,
**characterized in that**, before the feeding and/or the removal of the substrates, the wave-length selective filter is changed with respect to its local orientation and/or position in a manner that during the feeding and/or the removal of the substrates, the UV-radiation is not reflected by the wave-length selective filter and thus impinges on the absorption means and is absorbed by these means.

7. The method according to claim 6, **characterized in that** the filter is substantially moved out of the ray-path during the feeding and/or the removal of the substrates.

8. The method of claim 7, **characterized in that** the filter is moved out of the ray-path by a rotation about an axis located outside the ray-path.

9. The method according to one of claims 6 to 8, **characterized in that** the method is operated more than once and in a clocked manner.

## Revendications

1. Dispositif d'irradiation comprenant
- au moins une source de rayonnement qui émet à la fois un rayonnement ultraviolet et un rayonnement thermique, c'est-à-dire de la lumière visible et/ou un rayonnement infrarouge et
- un dispositif de transport pour alimenter des substrats à irradier et
- au moins un filtre sélectif en longueur d'onde qui réfléchit le rayonnement ultraviolet selon un angle de 45° et transmet le rayonnement thermique,
- des moyens pour absorber le rayonnement infrarouge disposés en aval du filtre optique, dans le sens de propagation, dans la trajectoire de faisceau du rayonnement thermique non dévié par le filtre sélectif en longueur d'onde,
**caractérisé en ce que** les moyens pour absorber le rayonnement infrarouge sont également conçus comme moyens pour absorber la lumière visible et les rayonnements ultraviolets, et **en ce que** le dispositif d'irradiation comprend des moyens de déplacement pour insérer le filtre sélectif en longueur d'onde dans la trajectoire de faisceau de la source de rayonnement et l'en retirer.

2. Dispositif d'irradiation selon la revendication 1, **caractérisé en ce que** les moyens de déplacement permettent de faire tourner le filtre autour d'un axe qui se situe en-dehors de la trajectoire de faisceau.

3. Dispositif d'irradiation selon l'une des revendications précédentes, **caractérisé en ce que** le filtre sélectif en longueur d'onde est conçu comme un filtre d'interférence.

4. Dispositif d'irradiation selon l'une des revendications précédentes, **caractérisé en ce qu'**il est prévu un système de couches réfléchissant les ultraviolets uniquement sur un côté du substrat de filtre.

5. Dispositif d'irradiation selon la revendication 4, **caractérisé en ce qu'**il est prévu sur l'autre côté du substrat de filtre une couche antireflet en ce qui concerne le rayonnement thermique.

6. Procédé pour appliquer des substrats avec un rayonnement ultraviolet comprenant les étapes consistant à :
- fournir une source de rayonnement qui émet un rayonnement ultraviolet et un rayonnement thermique,
- séparer le rayonnement ultraviolet du rayonnement thermique par transmission du rayonnement thermique à travers un filtre sélectif en longueur d'onde et par réflexion du rayonnement ultraviolet sur le filtre sélectif en longueur d'onde,
- fournir des moyens d'absorption qui absorbent le rayonnement non dévié par le filtre sélectif en longueur d'onde,
- amener les substrats dans la zone prévue pour l'application ultraviolette
- évacuer les substrats appliqués par le rayonnement ultraviolet,
**caractérisé en ce que**, avant d'amener et/ou d'évacuer les substrats, on modifie l'orientation et/ou la position du filtre sélectif en longueur d'onde de sorte que, pendant l'amenée et/ou l'évacuation des substrats, le rayonnement ultraviolet n'est pas réfléchi par le filtre sélectif en longueur d'onde et se produit par conséquent sur les moyens d'absorption et est absorbé par ces derniers.

7. Procédé selon la revendication 6, **caractérisé en ce que** le filtre, pendant l'amenée et/ou l'évacuation des substrats, est essentiellement dévié hors de la trajectoire de faisceau.

8. Procédé selon la revendication 7, **caractérisé en ce que** le filtre est déplacé en-dehors de la trajectoire du faisceau par une rotation autour d'un axe.

9. Procédé selon l'une des revendications 6 à 8, **caractérisé en ce que** le procédé est réalisé plusieurs fois et de façon cadencée.
